Europäisches Patentamt

European Patent Office

Office européen des brevets

(19)

(11) **EP 0 731 816 B1**

(12) **FASCICULE DE BREVET EUROPEEN**

(45) Date de publication et mention
de la délivrance du brevet:
**28.01.1998 Bulletin 1998/05**

(21) Numéro de dépôt: **95902162.7**

(22) Date de dépôt: **22.11.1994**

(51) Int Cl.⁶: **C08F 279/02**

(86) Numéro de dépôt international:
**PCT/FR94/01360**

(87) Numéro de publication internationale:
**WO 95/15348 (08.06.1995 Gazette 1995/24)**

(54) **COMPOSITION COMPRENANT UN POLYMERE VINYLAROMATIQUE ET UN CAOUTCHOUC ET SON PROCEDE D'OBTENTION**

ZUSAMMENSETZUNG ENTHALTEND EIN VINYLAROMATISCHES POLYMER UND HERSTELLUNGSVERFAHREN

COMPOSITION COMPRISING A VINYLAROMATIC POLYMER AND A RUBBER AND METHOD OF PRODUCTION

(84) Etats contractants désignés:
**AT BE CH DE DK ES FR GB GR IE IT LI NL PT SE**

(30) Priorité: **30.11.1993 FR 9314337**

(43) Date de publication de la demande:
**18.09.1996 Bulletin 1996/38**

(73) Titulaire: **ELF ATOCHEM S.A.**
**92800 Puteaux (FR)**

(72) Inventeurs:
• **SARRAF, Tarek**
**F-64140 Lons (FR)**

• **JENKINS, Thomas Edward**
**Stockport, Cheshire SK6 6PY (GB)**

(56) Documents cités:
**EP-A- 0 081 015      DE-A- 1 720 972**

• **DATABASE WPI Week 9044, Derwent Publications Ltd., London, GB; AN 90-331461 & JP,A,2 238 011 (JAP. SYNTH. RUBBER / NIPPON STEEL) 20 Septembre 1990**

**Description**

DOMAINE TECHNIQUE

L'invention concerne des compositions de polymères comprenant un polymère vinylaromatique et un caoutchouc. Ces compositions sont faciles à mettre en forme et présentent une bonne brillance et d'excellentes propriétés mécaniques.

Elles trouvent des applications dans des domaines aussi variés que l'électroménager, celui des articles de bureau ou l'emballage.

TECHNIQUE ANTERIEURE

Diverses techniques pour améliorer la résistance au choc des compositions à base de polymère vinylaromatique et de caoutchouc ont été proposées.

Le document EP 418 042 enseigne une composition de polystyrène choc comprenant un polybutadiène ramifié présentant une double répartition de masses moléculaires, le rapport des masses moléculaires moyennes de la composante des hautes masses sur celle des basses masses étant supérieure à un facteur 2,5 et de préférence compris entre 3 et 5. La composante des hautes masses moléculaires correspond aux molécules ramifiées alors que la composante des basses masses moléculaires correspond aux molécules incomplètement ramifiées. Le polybutadiène présente une teneur en structure cis-1,4 de préférence inférieure à 70 % et de manière encore préférée inférieure à 50 %.

Les polystyrènes choc ainsi obtenus ont une structure bimodale marquée et leur distribution des diamètres de particule indique la présence de trois populations distinctes de particules.

Le document JP 4-100810 enseigne l'utilisation d'un mélange de deux polybutadiènes présentant des viscosités très différentes. L'un de ces polybutadiènes doit présenter une viscosité intrinsèque comprise entre 3 et 7 dl/g tandis que l'autre polybutadiène doit présenter une viscosité intrinsèque comprise entre 0,5 et 1,4 dl/g. L'utilisation de tels polybutadiènes présente des limites. En effet, la fabrication d'un polybutadiène dont la viscosité intrinsèque est voisine de 7 dl/g est difficile à réaliser. De plus, si la viscosité du second polybutadiène est voisine de 1,4 dl/g, la viscosité de la solution de polymère qui contient en outre le premier polybutadiène de particulièrement haute viscosité, devient trop élevée.

EXPOSE DE L'INVENTION

Il a maintenant été trouvé des compositions de polymères comprenant un polymère vinylaromatique et un caoutchouc, ledit caoutchouc étant dérivé d'un polybutadiène haute viscosité et d'un polybutadiène basse viscosité, les viscosités intrinsèques de ces deux polybutadiènes étant voisines mais distinctes et telles que celle du polybutadiène haute viscosité est inférieure à 3 dl/g et celle du polybutadiène basse viscosité est supérieure à 1,4 dl/g. Le terme caoutchouc désigne la phase élastomérique contenue dans la composition selon l'invention.

Cette phase élastomérique contient toute la masse des polybutadiènes initialement engagés. Le caoutchouc des compositions selon l'invention contient donc du polybutadiène, lequel peut être partiellement réticulé ou greffé au polymère vinylaromatique. Ce caoutchouc forme l'enveloppe de particules contenant une partie du polymère vinylaromatique, lesdites particules étant elles-même dispersées dans une matrice de polymère vinylaromatique.

L'usage des deux polybutadiènes, haute et basse viscosité, conduit à des compositions de polymères aux propriétés mécaniques remarquables, en particulier sur le plan de la résistance aux chocs. Ces propriétés sont généralement supérieures à celles que l'on obtient par l'utilisation d'un seul de ces polybutadiènes, à taux de polybutadiène sensiblement identique et à taux de greffage sensiblement identique du polybutadiène avec du polymère vinylaromatique dans les compositions de polymères considérées.

Par ailleurs, une composition de polymères selon l'invention présente une résistance aux chocs supérieure à la moyenne arithmétique des résistances aux chocs des compositions obtenues d'une part avec le polybutadiène haute viscosité seul, d'autre part avec le polybutadiène basse viscosité seul, et ce à taux de polybutadiène sensiblement identique et à taux de greffage sensiblement identique du polybutadiène avec du polymère vinylaromatique dans les compositions de polymères considérées.

Ceci se traduit par le fait que si

- P représente la résistance aux chocs d'une composition C selon l'invention dont le caoutchouc est dérivé d'un polybutadiène haute viscosité X et d'un polybutadiène basse viscosité Y, x représentant le pourcentage en poids de X par rapport au poids total de polybutadiène engagé et y représentant le pourcentage en poids de Y par rapport au poids total de polybutadiène engagé,

- $P_x$ représente la résistance aux chocs d'une composition Cx comprenant le même polymère vinylaromatique que C et un caoutchouc obtenu exclusivement à partir de X, le taux de polybutadiène dans Cx étant ici identique au taux de polybutadiène dans C, les taux de greffage des polybutadiènes dans C et Cx étant sensiblement identiques,
- Py représente la résistance aux chocs d'une composition Cy comprenant le même polymère vinylaromatique que C et un caoutchouc obtenu exclusivement à partir de Y, le taux de polybutadiène dans Cy étant ici identique au taux de polybutadiène dans C, les taux de greffage des polybutadiènes dans C et Cy étant sensiblement identiques, on a la relation

$$P > \frac{xP_x + yP_y}{x + y}$$

De plus, une composition selon l'invention présente généralement des propriétés mécaniques supérieures à celles que l'on obtient par l'utilisation d'un seul polybutadiène dont la viscosité est comparable à la viscosité d'un mélange des polybutadiènes utilisés pour réaliser ladite composition, ledit mélange contenant les polybutadiènes haute et basse viscosité en proportions identiques à celles utilisées pour la réalisation de la composition selon l'invention, les taux de greffage des polybutadiènes dans les compositions de polymères considérées étant sensiblement identiques.

Cette dernière comparaison avec un seul polybutadiène n'a de sens que si ce dernier n'est pas lui-même un mélange de différents polybutadiènes et en tout état de cause présente une polymolécularité, c'est-à-dire un rapport de sa masse moléculaire moyenne en masse sur sa masse moléculaire moyenne en nombre, inférieure à 4.

Le polybutadiène haute viscosité est de structure linéaire, a une teneur en structure cis-1,4 supérieure à 80 % et de préférence supérieure à 90 % et présente une viscosité mesurée à 25°C à 5 % en poids dans le styrène allant de 120 à 350 centipoises et de préférence de 180 à 300 centipoises. Le polybutadiène basse viscosité est de structure linéaire, ramifiée ou étoilée, a une teneur en structure cis-1,4 inférieure à 80 % et de préférence comprise entre 30 et 60 % et présente une viscosité mesurée à 25°C à 5 % en poids dans le styrène allant de 30 à 90 centipoises et de préférence de 40 à 75 centipoises.

De préférence, le polybutadiène haute viscosité présente une teneur en structure vinyl-1,2 allant de 0,1 à 5 % et de manière encore préférée de 0,5 à 3 %.

De préférence, le polybutadiène basse viscosité présente une teneur en structure vinyl-1,2 allant de 1 à 25 % et de manière encore préférée de 5 à 18 %.

De préférence, la mise en oeuvre des polybutadiènes ci-dessus décrits est réalisée de façon à ce que le polybutadiène haute viscosité représente 10 à 90 % en poids du polybutadiène total engagé et en ce que le polybutadiène basse viscosité représente 90 à 10 % en poids du polybutadiène total engagé.

De manière encore préférée, la mise en oeuvre des polybutadiènes ci-dessus décrits est réalisée de façon à ce que le polybutadiène haute viscosité représente 10 à 70 % en poids du polybutadiène total engagé et en ce que le polybutadiène basse viscosité représente 90 à 30 % en poids du polybutadiène total engagé.

Les compositions selon l'invention contiennent de préférence du polybutadiène à raison de 2 à 25 %. Ceci inclut tout le polybutadiène contenu dans les compositions, soit sous une forme partiellement réticulée, soit sous une forme greffée à du polymère vinylaromatique, le polymère vinylaromatique greffé ne participant pas lui-même au pourcentage de polybutadiène ci-dessus indiqué.

Le polymère vinylaromatique est obtenu par polymérisation d'au moins un monomère vinylaromatique décrit ci-après. Ce peut donc être un copolymère.

Il n'est pas exclu que la composition de polymères contienne les adjuvants habituels aux polymères vinylaromatiques comme au moins un antioxydant et/ou au moins un plastifiant.

Un autre objet de l'invention concerne un procédé de fabrication des compositions de polymères ci-dessus décrites.

Le procédé selon l'invention, pouvant fonctionner en continu ou en discontinu, comprend une étape de polymérisation d'au moins un monomère vinylaromatique en présence des polybutadiènes haute et basse viscosité ci-dessus décrits.

Cette étape de polymérisation peut-être un procédé de polymérisation en suspension ou en masse, ces deux techniques étant dans leur principe bien connues de l'homme du métier. Pour le cas ou la polymérisation doit avoir lieu en masse, les polybutadiènes sont tout d'abord dissouts dans au moins un monomère vinylaromatique, éventuellement en présence d'un solvant organique, et il est ensuite procédé à une polymérisation dont l'amorçage peut être thermique ou peroxydique. Cette polymérisation, si son amorçage est thermique peut être conduite entre 110 et 180°C et de préférence entre 120 et 160°C. Si l'amorçage de la polymérisation est peroxydique, la polymérisation sera généralement conduite entre 70 et 180°C et de préférence entre 90 et 160°C. Lors de cette étape de polymérisation, le monomère vinylaromatique est polymérisé soit seul, soit avec une partie des polybutadiènes et l'on parle dans ce dernier cas de greffage entre les polybutadiènes et le monomère vinylaromatique, et de plus les polybutadiènes se réticulent partiellement.

Au cours de ces réactions se produit le phénomère bien connu d'inversion de phase conduisant à la formation de particules dispersées dans du polymère vinylaromatique.

L'agitation doit être suffisante pour que cette dispersion des particules soit uniforme.

A la suite de l'étape de polymérisation, il convient de procéder à l'élimination des espèces volatiles comme les monomères n'ayant pas réagit et l'éventuel solvant. Ceci peut être réalisé par des techniques conventionnelles comme par l'usage d'un dévolatilisateur fonctionnant à chaud et sous vide.

La teneur finale de la composition selon l'invention en polybutadiène et en polymère vinylaromatique dépend du degré d'avancement de la polymérisation réalisée avant élimination des espèces volatiles. En effet, si le degré d'avancement de la polymérisation est faible, l'élimination des espèces volatiles produira l'élimination d'une forte quantité de monomère vinylaromatique et la teneur finale de la composition en polybutadiène sera plus élevée. De façon à ne pas produire une trop forte réticulation des polybutadiènes, il est préférable de ne pas pousser la polymérisation à 100 % des monomères vinylaromatiques.

L'avancement de la polymérisation peut être suivi grâce à des prélèvements effectués au cours de l'étape de polymérisation et par détermination du taux de solide sur les échantillons prélevés. Par taux de solide on entend le pourcentage en poids de solide obtenu après évaporation sous un vide de 25 m bar pendant environ 20 minutes à 200°C des échantillons prélevés par rapport au poids initial de l'échantillon. Ce traitement élimine de l'échantillon prélevé les monomères vinylaromatiques non polymérisés au moment du prélèvement. On pourra pousser la polymérisation, par exemple jusqu'à l'obtention d'un taux de solide de 70 ou 80 %.

On peut ajouter au milieu de polymérisation, avant ou au cours de la polymérisation, au moins un adjuvant ou initiateur de polymérisation, habituels à ce genre de préparation. Ces adjuvants peuvent être des plastifiants comme des huiles minérales, le stéarate de butyle ou le phtalate de dioctyle, des stabilisants comme des antioxydants pouvant être le phénol substitué par un groupement alkyl tel que le ditertiobutylparacrésol ou les phosphites tel que le trinonylphénylphosphite.

Une huile plastifiante peut être introduite, généralement en proportion telle qu'elle soit présente dans la composition finale à raison de 0 à 8 % en poids et de préférence à raison de 0 à 5 % en poids.

Les initiateurs de polymérisation éventuellement ajoutés sont ceux utilisés habituellement pour ce genre de préparation. Ils peuvent être choisis parmi les peroxydes comme peroxyde de dibenzoyle, le peroxybenzoate de tert-butyle, le 1,1-bis(tert-butylperoxy)cyclohexane.

Par monomère vinylaromatique, on entend le styrène, le styrène substitué sur le groupement vinyl par un groupement alkyl tel que l'alpha-méthylstyrène ou l'alpha-éthylstyrène, le styrène substitué sur le cycle par un groupement alkyl tel que l'ortho-vinyltoluène, le para-vinyltoluène, l'ortho-éthylstyrène, le 2,4-diméthylstyrène, le styrène substitué sur le cycle par un halogène comme par exemple le 2,4-dichlorostyrène, le styrène substitué à la fois par un halogène et un groupement alkyl tel que le 2-chloro-4-méthylstyrène, ainsi que le vinylanthracène. Le styrène est un monomère vinylaromatique préféré.

La polymérisation peut être conduite en présence d'un solvant organique. On choisira ce solvant de telle sorte qu'il ne bout pas dans les conditions de polymérisation et de telle sorte qu'il soit miscible avec le monomère vinylaromatique et le polymère vinylaromatique qui en dérive. On peut utiliser les hydrocarbures alicycliques tel que le cyclohexane ou de manière préférée, les aromatiques tels que le toluène, le benzène, l'éthylbenzène ou le xylène.

En générale, la quantité de solvant utilisée sera telle que le milieu de polymérisation ne contienne pas plus de 40 % en poids de solvant organique.

MANIERES DE REALISER L'INVENTION

Dans les exemples qui suivent, la structure et les propriétés des compositions de polymères obtenus ont été déterminées par les techniques suivantes :

- indice de fluidité à chaud : norme ISO 1133 condition H
- point Vicat 1 kg : norme ISO 306 A
- résistance au choc IZOD entaillé : norme ISO 180/1A
- module d'élasticité mesuré en flexion : norme ISO 178
- résistance à la rupture en traction et en flexion : norme ISO R 527
- masse moléculaire du polystyrène : le polystyrène est extrait du polystyrène choc par la méthyléthylcétone et sa masse moléculaire est mesurée par chromatographie par perméation de gel (GPC).
  Dans le tableau 1, Mw représente la masse moléculaire moyenne en poids du polystyrène, Mn représente la masse moléculaire moyenne en nombre du polystyrène et Mw/Mn représente le rapport de la masse moléculaire moyenne en poids sur la masse moléculaire moyenne en nombre du polystyrène.
- indice de gonflement et taux de culot
  on met 0,4 grammes de polystyrène choc dans 40 ml de toluène à température ambiante sous agitation pendant deux heures. La composition ainsi obtenue est ensuite centrifugée à 20000 tours par minute pendant 30 minutes de façon à pouvoir séparer le gel formé de la solution. Le gel humide (imprégné de toluène), obtenu après séparation de la solution, est ensuite séché sous vide à 80°C, et l'on obtient un gel sec.

Si Mh représente la masse de gel humide, Ms la masse de gel sec et Me la masse de la prise d'essai de polystyrène choc, l'indice de gonflement IG est donné par la formule $IG = \frac{Mh}{Ms}$ et le taux de culot Tc, exprimé en pourcentage en poids, est donné par la formule $Tc = \frac{Ms}{Me} \times 100$.

Le taux de culot indique sensiblement le taux de caoutchouc de la composition de polymère car il additionne le pourcentage total en poids de polybutadiène et le pourcentage en poids de polystyrène greffé à du polybutadiène dans la composition de polymère.

Deux compositions présentant un taux de culot identique et un taux de polybutadiène identique seront donc considérées comme présentant un taux de greffage entre le polybutadiène et le polystyrène identique.

- taux de polybutadiène dans les compositions : norme NF T 51-007
- taille moyenne des particules de caoutchouc : par granulométrie à sédimentation (capa 700) après mise en solution dans la méthyléthylcétone.

Dans les tableaux, la ligne "HV/BV" donne le pourcentage relatif en poids de polybutadiène haute viscosité ("HV") et de polybutadiène basse viscosité ("BV").

## EXEMPLE 1

Dans un réacteur de 15 litres muni d'une agitation mécanique et d'une régulation de température, on introduit 7,9 kg de styrène, 1,2 kg d'éthylbenzène et 300 grammes d'une huile plastifiante de viscosité 210 centipoises à 20°C, de marque PRIMOL 352 commercialisée par la société ESSO.

On introduit ensuite à la température ambiante et sous agitation 300 grammes d'un premier polybutadiène de marque BR 1202 G commercialisé par la société SHELL, sous la forme de morceaux solides gommeux, ledit polybutadiène étant de structure linéaire et présentant une viscosité à 25°C à 5 % dans le styrène de 160 centipoises et une viscosité intrinsèque à 25°C de 2,5 dl/g, une masse moléculaire moyenne en poids de 287 000, une teneur en structure cis-1,4 de 96,5, puis 300 grammes d'un second polybutadiène de marque P 1001 commercialisé par la société Enichem, sous la forme de morceaux solides gommeux, ledit polybutadiène étant de structure ramifiée et présentant une viscosité à 25°C à 5 % dans le styrène de 45 centipoises et une viscosité intrinsèque à 25°C de 1,9 dl/g, une masse moléculaire moyenne en poids de 175 000, une teneur en structure cis-1,4 de 45 % et une teneur en structure vinyl-1,2 de II %.

Les deux polybutadiènes ont donc été introduits en quantité égale dans le réacteur. A titre d'indication, il est mentionné qu'un mélange à part égale de ces deux polybutadiènes présente une viscosité à 25°C à 5 % dans le styrène de 120 centipoises.

Après solubilisation totale du polybutadiène, on procède à la polymérisation thermique de la solution. L'avancement de la polymérisation est suivi par mesure du taux de solide obtenu à partir de prélèvement effectués au cours de la polymérisation. Le taux de solide correspond au pourcentage en poids de solide obtenu après évaporation sous vide à 200°C des échantillons prélevés, par rapport au poids initial de l'échantillon.

Le réacteur est tout d'abord chauffé à 126°C jusqu'à l'obtention d'un taux de solide de 27 %. La température est ensuite portée de 126 à 157°C en 90 minutes. Le taux de solide à cet instant est d'environ 70 %. Le contenu du réacteur est ensuite transféré dans un dévolatilisateur à environ 180°C sous vide, environ 10 minutes de façon à extraire le styrène non polymérisé et l'éthylbenzène. Le produit obtenu est granulé de façon connue de l'Homme du métier. Pour la réalisation des tests mécaniques, des éprouvettes sont élaborées par injection. Le tableau 1 rassemble les résultats. Le polystyrène choc obtenu présente une distribution de tailles de particules monomodale avec un maximum vers 1 µm.

## EXEMPLE 2

On répète l'exemple 1, sauf que l'on introduit 150 grammes du premier polybutadiène et 450 grammes du second polybutadiène. Le tableau 1 rassemble les résultats.

## EXEMPLE 3 (Comparatif)

On répète l'exemple 1, sauf que l'on remplace les 300 grammes du premier polybutadiène et les 300 grammes du second polybutadiène par 600 grammes d'un polybutadiène linéaire de marque HX 529C commercialisé par la société BAYER, de viscosité à 25°C à 5 % dans le styrène de 140 centipoises et de viscosité intrinsèque à 25°C de 2,1 dl/g, de masse moléculaire moyenne en poids de 224 000 de polymolécularité 1,26, de teneur en structure cis-1,4 de 38 %, et de teneur en structure vinyl-1,2 de 11 %. Le tableau 1 rassemble les résultats.

## EXEMPLE 4

Dans un réacteur de 15 litres muni d'une agitation mécanique et d'une régulation de température, on introduit 9 kg de styrène, 0,6 kg d'éthylbenzène, 0,2 kg d'une huile plastifiante de viscosité 210 centipoises à 20°C, de marque PRIMOL 352, commercialisée par la société ESSO.

On introduit ensuite à la température ambiante et sous agitation 200 grammes d'un premier polybutadiène, de marque BR 1202G commercialisé par la société SHELL, sous la forme de morceaux solides gommeux, ledit polybutadiène étant de structure linéaire et présentant une viscosité à 25°C à 5 % dans le styrène de 160 centipoises et une viscosité intrinsèque à 25°C de 2,5 dl/g, une masse moléculaire moyenne en poids de 287 000, une teneur en structure cis-1,4 de 96,5 % puis 200 grammes d'un second polybutadiène de marque HX 565SIC commercialisé par la société BAYER, sous la forme de morceaux solides gommeux, ledit polybutadiène étant de structure ramifiée et présentant une viscosité à 25°C à 5% dans le styrène de 40 centipoises et une viscosité intrinsèque à 25°C de 1,7 dl/g, une masse moléculaire moyenne en poids de 165 000, une teneur en structure cis-1,4 de 37 %, une teneur en structure vinyl-1,2 de 11 %.

Après solubilisation totale du polybutadiène, on procède à la polymérisation thermique de la solution, de façon identique à la procédure de polymérisation décrite dans l'exemple 1. Le tableau 1 rassemble les résultats.

## EXEMPLE 5 (comparatif)

On procède comme dans l'exemple 4, sauf que l'on remplace les 200 grammes du second polybutadiène par 200 grammes d'un polybutadiène linéaire de marque H 529C commercialisé par la société BAYER, présentant une viscosité à 25°C à 5 % dans le styrène de 120 centipoises et une viscosité intrinsèque à 25°C de 2,1 dl/g, une masse moléculaire moyenne en poids de 224 000, une teneur en structure cis-1,4 de 38 %, une teneur en structure vinyl-1,2 de II %. Le tableau 1 rassemble les résultats.

## EXEMPLE 6 (comparatif)

On procède comme pour l'exemple 1 sauf que l'on introduit 600 grammes du premier polybutadiène et pas de second polybutadiène.

Le tableau 2 rassemble les résultats.

## EXEMPLE 7 (comparatif)

On procède comme pour l'exemple 1 sauf que l'on introduit 600 grammes du second polybutadiène et pas de premier polybutadiène.

Le tableau 2 rassemble les résultats.

## EXEMPLE 8

On procède comme pour l'exemple 1 sauf que l'on introduit 60 grammes du premier polybutadiène et 540 grammes du second polybutadiène.

Le tableau 2 rassemble les résultats.

## EXEMPLE 9

On procède comme pour l'exemple 1 sauf que l'on introduit 420 grammes du premier polybutadiène et 180 grammes du second polybutadiène.

Le tableau 2 rassemble les résultats.

## EXEMPLE 10

On procède comme pour l'exemple 4 sauf que l'on remplace les 200 grammes du polybutadiène de marque BR 1202 G par 200 grammes d'un polybutadiène de marque BR 40 commercialisé par la Société ENICHEM, ce dernier polybutadiène présentant une teneur en structure cis-1,4 supérieure à 98 % et une viscosité à 25° C à 5 % en poids dans le styrène de 330 centipoises.

Le tableau 2 rassemble les résultats.

| | UNITE | EXEMPLE 1 | EXEMPLE 2 | EXEMPLE 3 (Comparatif) | EXEMPLE 4 | EXEMPLE 5 (Comparatif) |
|---|---|---|---|---|---|---|
| Structure des compositions de polymères | | | | | | |
| - Taux de polybu-tadiène | % poids | 8,2 | 8,5 | 8,4 | 6,3 | 6,1 |
| - HV/BV | % poids | 50/50 | 25/75 | | | |
| - taille moyenne des particules | µm | 1,2 | 1,1 | 1,6 | | |
| - Mw | g/mole | 195 900 | 199 100 | 195200 | 217000 | 214000 |
| - Mn | g/mole | 78 380 | 79 850 | 77810 | 70000 | 69700 |
| - Mw/Mn | | 2,5 | 2,5 | 2,5 | 3,1 | 3,1 |
| - Taux de culot | % en poids | 22,3 | 22,1 | 25,2 | 16,5 | 18,5 |
| - Indice de gonfle-ment | | 14,6 | 12,6 | 14,9 | 10,6 | 10,2 |
| Propriétés Mécaniques | | | | | | |
| - Indice de fluidité | g/10 min | 4 | 3,7 | 3,3 | 3,5 | 3,3 |
| - point Vicat 1 kg | °C | 96,3 | 96,5 | 97 | | |
| - résistance au choc IZOD entaillé | Kg.cm/cm$^2$ | 11,5 | 12,2 | 10,2 | 7,6 | 6,7 |
| - Module de flexion | MPa | 1860 | 1990 | 1620 | | |
| - Résistance à la traction | MPa | 21 | 21 | 11 | 27,4 | 27,6 |
| - Résistance à la flexion | MPa | 36 | 38 | | | |

**TABLEAU 1**

EP 0 731 816 B1

| | | UNITE | EXEMPLE 6 (comparatif) | EXEMPLE 7 (comparatif) | EXEMPLE 8 | EXEMPLE 9 | EXEMPLE 10 |
|---|---|---|---|---|---|---|---|
| Structure des compositions de polymères | - Taux de polybu-ladiène<br>- HV/BV<br>- taille moyenne des particules<br>- Mw<br>- Mn<br>- Mw/Mn<br>- Taux de culot<br>- Indice de gonfle-ment | % poids<br>% poids<br>µm<br>g/mole<br>g/mole<br>% en poids | 8,1<br>100/0<br>2,2 | 8,3<br>0/100<br>0,45 | 8,3<br>10/90<br>0,75 | 8,2<br>70/30<br>1,9 | 6,1<br>50/50<br>1,2 |
| Propriétés Mécaniques | - Indice de fluidité<br>- point Vicat 1 kg<br>- résistance au choc IZOD entaillé<br>- Module de flexion<br>- Résistance à la traction<br>- Résistance à la flexion | g/10 min<br>°C<br>Kg.cm/cm²<br><br>MPa<br>MPa<br><br>MPa | 4,2<br>96,5<br>8,5<br><br>1650<br>15 | 3,2<br>96,8<br>6,3<br><br>2100<br>24 | 3,5<br>97<br>7,9<br><br>1990<br>20 | 3,9<br>96,4<br>10,5<br><br>1930<br>22 | 3,6<br>95<br>7,1<br><br>2100<br>28,5 |

**TABLEAU 2**

**Revendications**

1. Composition de polymères comprenant un polymère vinylaromatique et un caoutchouc contenant du polybutadiène caractérisé en ce que le caoutchouc est dérivé d'un polybutadiène haute viscosité et d'un polybutadiène basse viscosité, ledit polybutadiène haute viscosité présentant une structure linéaire, une teneur en structure cis-1,4 supérieure à 80 % et une viscosité mesurée à 25°C à 5 % en poids dans le styrène allant de 120 à 350 centipoises, et ledit polybutadiène basse viscosité présentant une teneur en structure cis-1,4 inférieure à 80 % et une viscosité mesurée à 25°C à 5 % en poids dans le styrène allant de 30 à 90 centipoises.

2. Composition selon la revendication 1 caractérisée en ce que le polybutadiène haute viscosité présente une viscosité mesurée à 25°C à 5 % en poids dans le styrène comprise entre 180 et 300 centipoises.

3. Composition selon la revendication 1 ou 2 caractérisée en ce que le polybutadiène basse viscosité présente une viscosité mesurée à 25°C à 5 % en poids dans le styrène comprise entre 40 et 75 centipoises.

4. Composition selon l'une des revendications 1 à 3 caractérisée en ce que le polybutadiène haute viscosité présente une teneur en structure cis-1,4 supérieure à 90 %.

5. Composition selon l'une des revendications 1 à 4 caractérisée en ce que le polybutadiène basse viscosité présente une teneur en structure cis-1,4 allant de 30 à 60 %.

6. Composition selon l'une des revendications 1 à 5 caractérisée en ce que le polybutadiène haute viscosité présente une teneur en structure vinyl-1,2 allant de 0,1 à 5 % et de préférence de 0,5 à 3 %.

7. Composition selon l'une des revendications 1 à 6 caractérisée en ce que le polybutadiène basse viscosité présente une teneur en structure vinyl-1,2 allant de 1 à 25 % et de préférence de 5 à 18 %.

8. Composition selon l'une des revendications 1 à 7 caractérisée en ce que le polybutadiène haute viscosité représente 10 à 90 % en poids du polybutadiène total engagé et en ce que le polybutadiène basse viscosité représente 90 à 10 % en poids du polybutadiène total engagé.

9. Composition selon la revendication 8 caractérisée en ce que le polybutadiène haute viscosité représente 10 à 70 % en poids de polybutadiène total engagé et en ce que le polybutadiène basse viscosité représente 90 à 30 % en poids du polybutadiène total engagé.

10. Composition selon l'une des revendications 1 à 9 caractérisée en ce qu'elle contient 2 à 25 % en poids de polybutadiène.

11. Composition selon l'une des revendications 1 à 10 caractérisée en ce que le polymère vinylaromatique est le polystyrène.

12. Composition selon l'une des revendications 1 à 11 caractérisée en ce qu'elle contient au moins un plastifiant.

13. Composition selon l'une des revendications 1 à 12 caractérisée en ce qu'elle contient au moins un antioxydant.

14. Procédé de fabrication d'une composition de polymères comprenant un polymère vinylaromatique et un caoutchouc comprenant une étape de polymérisation d'au moins un monomère vinylaromatique en présence d'un polybutadiène haute viscosité et d'un polybutadiène basse viscosité et éventuellement d'un solvant organique, caractérisé en ce que le polybutadiène haute viscosité présente une structure linéaire, une teneur en structure cis-1,4 supérieure à 80 % et une viscosité mesurée à 25°C à 5 % en poids dans le styrène allant de 120 à 350 centipoises, et le polybutadiène basse viscosité présente une teneur en structure cis-1,4 inférieure à 80 % et une viscosité mesurée à 25°C à 5 % en poids dans le styrène allant de 30 à 90 centipoises.

15. Procédé selon la revendication 14 caractérisé en ce que le polybutadiène haute viscosité présente une viscosité mesurée à 25°C à 5 % en poids dans le styrène comprise entre 180 et 300 centipoises.

16. Procédé selon la revendication 14 ou 15 caractérisé en ce que le polybutadiène basse viscosité présente une viscosité mesurée à 25°C à 5 % en poids dans le styrène comprise entre 40 et 75 centipoises.

17. Procédé selon l'une des revendications 14 à 16 caractérisé en ce que le polybutadiène haute viscosité présente une teneur en structure cis-1,4 supérieure à 90 %.

18. Procédé selon l'une des revendications 14 à 17 caractérisé en ce que le polybutadiène basse viscosité présente une teneur en structure cis-1,4 allant de 30 à 60 %.

19. Procédé selon l'une des revendications 14 à 18 caractérisé en ce que le polybutadiène haute viscosité représente 10 à 90 % en poids du polybutadiène total engagé et en ce que le polybutadiène basse viscosité représente 90 à 10 % en poids du polybutadiène total engagé.

20. Procédé selon la revendication 19 caractérisé en ce que le polybutadiène haute viscosité représente 10 à 70 % en poids du polybutadiène total engagé et en ce que le polybutadiène basse viscosité représente 90 à 30 % en poids du polybutadiène total engagé.

21. Procédé selon l'une des revendications 14 à 19 caractérisé en ce que l'étape de polymérisation est réalisée en masse.

22. Procédé selon l'une des revendications 14 à 20 caractérisé en ce qu'au moins un monomère vinylaromatique est le styrène.

23. Procédé selon l'une des revendications 14 à 21 caractérisé en ce que l'étape de polymérisation est réalisée en présence d'au moins un adjuvant comme un plastifiant ou un antioxydant.

**Patentansprüche**

1. Polymerzusammensetzung, enthaltend ein vinylaromatisches Polymer und einen Polybutadien enthaltenden Kautschuk, dadurch gekennzeichnet, daß der Kautschuk sich von einem Polybutadien hoher Viskosität und einem Polybutadien niedriger Viskosität ableitet, wobei das Polybutadien hoher Viskosität eine lineare Struktur, einen Gehalt an cis-1,4-Struktur von mehr als 80% und eine Viskosität, die bei 25°C bei einer Konzentration von 5 Gew.-% in Styrol gemessen wird, von 120 bis 350 Centipoise aufweist und wobei das Polybutadien mit niedriger Viskosität einen Gehalt an cis-1,4-Struktur von weniger als 80 % und eine Viskosität, die bei 25 °C bei einer Konzentration von 5 Gew.-% in Styrol gemessen wird, von 30 bis 90 Centipoise aufweist.

2. Zusammensetzung nach Anspruch 1, dadurch gekennzeichnet, daß das Polybutadien hoher Viskosität eine Viskosität, die bei 25 °C bei einer Konzentration von 5 Gew.-% in Styrol gemessen wird, von 180 bis 300 Centipoise aufweist.

3. Zusammensetzung nach Anspruch 1 oder 2, dadurch gekennzeichnet, daß das Polybutadien niedriger Viskosität eine Viskosität, die bei 25 °C bei einer Konzentration von 5 Gew.-% in Styrol gemessen wird, von 40 bis 75 Centipoise aufweist.

4. Zusammensetzung nach einem der Ansprüche 1 bis 3, dadurch gekennzeichnet, daß das Polybutadien hoher Viskosität einen Gehalt an cis-1,4-Struktur von mehr als 90 % aufweist.

5. Zusammensetzung nach einem der Ansprüche 1 bis 4, dadurch gekennzeichnet, daß das Polybutadien mit niedriger Viskosität einen Gehalt an cis-1,4-Struktur von 30 bis 60 % aufweist.

6. Zusammensetzung nach einem der Ansprüche 1 bis 5, dadurch gekennzeichnet, daß das Polybutadien hoher Viskosität einen Gehalt an 1,2-Vinylstruktur von 0,1 bis 5 %, vorzugsweise von 0,5 bis 3 %, aufweist.

7. Zusammensetzung nach einem der Ansprüche 1 bis 6, dadurch gekennzeichnet, daß das Polybutadien mit geringer Viskosität einen Gehalt an 1,2-Vinylstruktur von 1 bis 25 %, vorzugsweise von 5 bis 18 %, aufweist.

8. Zusammensetzung nach einem der Ansprüche 1 bis 7, dadurch gekennzeichnet, daß das Polybutadien mit hoher Viskosität 10 bis 90 Gew.-% des insgesamt eingesetzten Polybutadiens darstellt und daß das Polybutadien mit geringer Viskosität 90 bis 10 Gew.-% des insgesamt eingesetzten Polybutadiens darstellt.

**9.** Zusammensetzung nach Anspruch 8, dadurch gekennzeichnet, daß das Polybutadien hoher Viskosität 10 bis 70 Gew.-% des insgesamt eingesetzten Polybutadiens darstellt und daß das Polybutadien mit geringer Viskosität 90 bis 30 Gew.-% des insgesamt eingesetzten Polybutadiens darstellt.

**10.** Zusammensetzung nach einem der Ansprüche 1 bis 9, dadurch gekennzeichnet, daß sie 2 bis 25 Gew.-% Polybutadien enthält.

**11.** Zusammensetzung nach einem der Ansprüche 1 bis 10, dadurch gekennzeichnet, daß das vinylaromatische Polymer Polystyrol ist.

**12.** Zusammensetzung nach einem der Ansprüche 1 bis 11, dadurch gekennzeichnet, daß sie mindestens einen Weichmacher enthält.

**13.** Zusammensetzung nach einem der Ansprüche 1 bis 12, dadurch gekennzeichnet, daß sie mindestens ein Antioxidationsmittel enthält.

**14.** Verfahren zur Herstellung einer Polymerzusammensetzung, die ein vinylaromatisches Polymer und einen Kautschuk umfaßt, wobei das Verfahren einen Verfahrensschritt zur Polymerisation mindestens eines vinylaromatischen Monomers in Gegenwart eines Polybutadiens mit hoher Viskosität und eines Polybutadiens mit geringer Viskosität und gegebenenfalls eines organischen Lösemittels umfaßt, dadurch gekennzeichnet, daß das Polybutadien hoher Viskosität eine lineare Struktur, einen Gehalt an cis-1,4-Struktur von mehr als 80 % und eine Viskosität, gemessen bei 25 °C mit einer Konzentration von 5 Gew.-% in Styrol, von 120 bis 350 Centipoise aufweist und daß das Polybutadien geringer Viskosität einen Gehalt an cis-1,4-Struktur von weniger als 80 % und eine Viskosität, gemessen bei 25 °C mit einer Konzentration von 5 Gew.-% in Styrol, von 30 bis 90 Centipoise aufweist.

**15.** Verfahren nach Anspruch 14, dadurch gekennzeichnet, daß das Butadien hoher Viskosität eine Viskosität, gemessen bei 25 °C mit einer Konzentration von 5 Gew.-% in Styrol, von 180 bis 300 Centipoise aufweist.

**16.** Verfahren nach Anspruch 14 oder 15, dadurch gekennzeichnet, daß das Butadien geringer Viskosität eine Viskosität, gemessen bei 25 °C mit einer Konzentration von 5 Gew.-% in Styrol, von 40 bis 75 Centipoise aufweist.

**17.** Verfahren nach einem der Ansprüche 14 bis 16, dadurch gekennzeichnet, daß das Polybutadien hoher Viskosität einen Gehalt an cis-1,4-Struktur von mehr als 90 % aufweist.

**18.** Verfahren nach einem der Ansprüche 14 bis 17, dadurch gekennzeichnet, daß das Polybutadien geringer Viskosität einen Gehalt an cis-1,4-Struktur von 30 bis 60 % aufweist.

**19.** Verfahren nach einem der Ansprüche 14 bis 18, dadurch gekennzeichnet, daß das Polybutadien hoher Viskosität 10 bis 90 Gew.-% des insgesamt eingesetzten Polybutadiens darstellt und daß das Polybutadien geringer Viskosität 90 bis 10 Gew.-% des insgesamt eingesetzten Polybutadiens darstellt.

**20.** Verfahren nach Anspruch 19, dadurch gekennzeichnet, daß das Polybutadien hoher Viskosität 10 bis 70 Gew.-% des insgesamt eingesetzten Polybutadiens darstellt und daß das Polybutadien geringer Viskosität 90 bis 30 Gew.-% des insgesamt eingesetzten Polybutadiens darstellt.

**21.** Verfahren nach einem der Ansprüche 14 bis 20, dadurch gekennzeichnet, daß der Polymerisationsschritt in Masse durchgeführt wird.

**22.** Verfahren nach einem der Ansprüche 14 bis 21, dadurch gekennzeichnet, daß mindestens eine vinylaromatisches Monomer Styrol ist.

**23.** Verfahren nach einem der Ansprüche 14 bis 22, dadurch gekennzeichnet, daß der Polymerisationsarbeitsschritt in Gegenwart mindestens eines Zusatzstoffes wie einem Weichmacher oder einem Antioxidationsmittel durchgeführt wird.

## Claims

1. Polymer composition comprising a vinylaromatic polymer and a rubber containing polybutadiene, characterized in that the rubber is derived from a high-viscosity polybutadiene and from a low-viscosity polybutadiene, the said high-viscosity polybutadiene exhibiting a linear structure, a cis-1,4 structure content higher than 80 % and a viscosity, measured at 25°C at a concentration of 5 % by weight in styrene, ranging from 120 to 350 centipoises, and the said low-viscosity polybutadiene exhibiting a cis-1,4 structure content lower than 80 % and a viscosity, measured at 25°C at a concentration of 5 % by weight in styrene, ranging from 30 to 90 centipoises.

2. Composition according to Claim 1, characterized in that the high-viscosity polybutadiene exhibits a viscosity, measured at 25°C at a concentration of 5 % by weight in styrene, of between 180 and 300 centipoises.

3. Composition according to Claim 1 or 2, characterized in that the low-viscosity polybutadiene exhibits a viscosity, measured at 25°C at a concentration of 5 % by weight in styrene, of between 40 and 75 centipoises.

4. Composition according to one of Claims 1 to 3, characterized in that the high-viscosity polybutadiene exhibits a cis-1,4 structure content higher than 90 %.

5. Composition according to one of Claims 1 to 4, characterized in that the low-viscosity polybutadiene exhibits a cis-1,4 structure content ranging from 30 to 60 %.

6. Composition according to one of Claims 1 to 5, characterized in that the high-viscosity polybutadiene exhibits a 1,2-vinyl structure content ranging from 0.1 to 5 % and preferably from 0.5 to 3 %.

7. Composition according to one of Claims 1 to 6, characterized in that the low-viscosity polybutadiene exhibits a 1,2-vinyl structure content ranging from 1 to 25 % and preferably from 5 to 18 %.

8. Composition according to one of Claims 1 to 7, characterized in that the high-viscosity polybutadiene represents 10 to 90 % by weight of the total polybutadiene introduced and in that the low-viscosity polybutadiene represents 90 to 10 % by weight of the total polybutadiene introduced.

9. Composition according to Claim 8, characterized in that the high-viscosity polybutadiene represents 10 to 70 % by weight of total polybutadiene introduced and in that the low-density polybutadiene represents 90 to 30 % by weight of the total polybutadiene introduced.

10. Composition according to one of Claims 1 to 9, characterized in that it contains 2 to 25 % by weight of polybutadiene.

11. Composition according to one of Claims 1 to 10, characterized in that the vinylaromatic polymer is polystyrene.

12. Composition according to one of Claims 1 to 11, characterized in that it contains at least one plasticizer.

13. Composition according to one of Claims 1 to 12, characterized in that it contains at least one antioxidant.

14. Process for the manufacture of a polymer composition comprising a vinylaromatic polymer and a rubber, comprising a stage of polymerization of at least one vinylaromatic monomer in the presence of a high-viscosity polybutadiene and of a low-viscosity polybutadiene and optionally of an organic solvent, characterized in that the high-viscosity polybutadiene exhibits a linear structure, a cis-1,4 structure content higher than 80 % and a viscosity, measured at 25°C at a concentration of 5 % in styrene, ranging from 120 to 350 centipoises, and the low-viscosity polybutadiene exhibits a cis-1,4 structure content lower than 80 % and a viscosity, measured at 25°C at a concentration of 5 % by weight in styrene, ranging from 30 to 90 centipoises.

15. Process according to Claim 14, characterized in that the high-viscosity polybutadiene exhibits a viscosity, measured at 25°C at a concentration of 5 % by weight in styrene, of between 180 and 300 centipoises.

16. Process according to Claim 14 or 15, characterized in that the low-viscosity polybutadiene exhibits a viscosity, measured at 25°C at a concentration of 5 % by weight in styrene, of between 40 and 75 centipoises.

17. Process according to one of Claims 14 to 16, characterized in that the high-viscosity polybutadiene exhibits a cis-1,4 structure content higher than 90 %.

18. Process according to one of Claims 14 to 17, characterized in that the low-viscosity polybutadiene exhibits a cis-1,4 structure content ranging from 30 to 60 %.

19. Process according to one of Claims 14 to 18, characterized in that the high-viscosity polybutadiene represents 10 to 90 % by weight of the total polybutadiene introduced and in that the low-viscosity polybutadiene represents 90 to 10 % by weight of the total polybutadiene introduced.

20. Process according to Claim 19, characterized in that the high-viscosity polybutadiene represents 10 to 70 % by weight of the total polybutadiene introduced and in that the low-density polybutadiene represents 90 to 30 % by weight of the total polybutadiene introduced.

21. Process according to one of Claims 14 to 19, characterized in that the polymerization stage is carried out in bulk.

22. Process according to one of Claims 14 to 20, characterized in that at least one vinylaromatic monomer is styrene.

23. Process according to one of Claims 14 to 21, characterized in that the polymerization stage is carried out in the presence of at least one adjuvant such as a plasticizer or an antioxidant.